# EUROPEAN PATENT SPECIFICATION

(11) **EP 3 656 195 B1**
(45) Date of publication and mention of the grant of the patent: **04.01.2023**
(21) Application number: 19211246.4
(22) Date of filing: 25.11.2019
(51) Int. Cl.: A01B 39/18, A01B 63/00, A01B 19/10, A01B 19/02, A01B 63/114

(54) **METHOD FOR MECHANICAL WEED CONTROL OF A CROP FIELD, AND A SPRING TINE HARROW FOR SUCH METHOD**
VERFAHREN ZUR MECHANISCHEN UNKRAUTBEKÄMPFUNG EINES GETREIDEFELDES UND FEDERZINKENEGGE FÜR EIN SOLCHES VERFAHREN
PROCÉDÉ DE DÉSHERBAGE MÉCANIQUE D'UN CHAMP DE CULTURES ET HERSE À DENT FLEXIBLE POUR UN TEL PROCÉDÉ

(30) Priority: 26.11.2018 DK PA201800908
(43) Date of publication of application: 27.05.2020
(73) Proprietor: CMN Maskintec A/S, 7790 Thyholm (DK)
(72) Inventor: Nygård, Claus Martin Holmen, 7790 Thyholm (DK)
(74) Representative: Larsen & Birkeholm A/S

(56) References cited:
- EP-A1- 3 400 764
- CA-A1- 3 017 315
- US-A1- 2016 234 994
- US-A1- 2018 139 892
- US-A1- 2018 153 084

## Description

### Technical field of the invention

The present invention relates to the field of mechanical weed control of crops.

### Background of the invention

The main rule within mechanical weed control is to controlling seed weed by covering it. Therefore, it is important to till the soil as thoroughly as possible, without damaging the cultivated crop. A problem with current weed harrowing apparatuses is the working depth. If the working depth of a weed harrow is too great the cultivated crop may be damaged, and if the working depth is too shallow the seed weed will not be sufficiently hindered in its growth. In many crop fields, the hardness of the soil varies, which makes it even more difficult to control the working depth.

The documents EP 3 400 764 A1, CA 3 017 315 A1, and US 2018/139892 A1 describe known weed harrowing apparatuses damaging the cultivated crop; whereas the documents US 2016/234994 A1 and US 2018/153084 A1 describe known weed harrowing apparatuses allowing no damage of the cultivated crop.

### Object of the Invention

The objective of the present invention is to provide a versatile spring tine harrow, which can automatically adjust to fields with differing soil types.

### Description of the Invention

The solution to the technical problem is achieved by the subject-matter of independent claims 1 and 4, defining respectively the first and second aspects of the invention. Particular embodiments of the invention are defined in the dependent claims. A third embodiment not covered by the claimed invention relates to a spring tine harrow comprising:
- a first carrying frame; and
- one or more tine sections suspended from said first carrying frame;
wherein each tine section comprises a plurality of spring tines, each tine section being tiltably attached to said carrying frame;
wherein the spring tine harrow further comprises a sensor unit configured to determine the extent of tilt of the tine section relative to the first carrying frame.

This configuration allows for the user of the harrow to know when he or she passes into a zone of the field with a different soil type.

The extent of tilt of the tine section relative to the first carrying frame may be directly or indirectly measured or determined by the sensor unit. Suitable types of sensor units may comprise a potentiometric position sensor, or a proximity sensor. In one or more embodiments, the sensor unit is slidably connected to a spring tine.

In one or more embodiments, the spring tine harrow further comprises an actuator means adapted for tilting the tine section relative to the first carrying frame. This configuration allows for both manual and automatic control of the degree of tilt of the tine section relative to the first carrying frame in response to the sensor input.

In one or more embodiments, the spring tine harrow further comprises a control module in communication with the actuator means and configured to instruct the actuator means to tilt the tine section relative to the first carrying frame.

In one or more embodiments, the control module is in communication with the sensor unit and configured to continuously, or at pre-set time periods, receive data from said sensor unit. It may be an advantage that the control module is configured to compute mean values describing the degree of tilt of the tine section relative to the first carrying frame over pre-set time periods, such as every 2-10 seconds, such as 5-10 seconds, and only to respond to such mean values to avoid falls positives, e.g. when the harrow passes over a stone. During said pre-set time periods, several measurements, e.g. performed each second, will be performed by the sensor unit. A mean value of these measurements is then computed by the control module. In some embodiments, the spring tine harrow comprises two or more sensor units. In this situation, all measurements from the sensor units are used by the control unit to compute a mean value.

Preferably, outliers, i.e. measurements deviating more than a pre-set threshold percentage from the other measurements, are discarded by the control module before computing the mean value.

In one or more embodiments, the control module is configured to instruct the actuator means to tilt the tine section relative to the first carrying frame when received data about the current degree of tilt of the tine section relative to the first carrying frame is above or below a pre-set threshold degree of tilt. This configuration allows the control module to automatically return the tine section to a position corresponding to said pre-set threshold degree of tilt of the tine section relative to the first carrying frame. More force is needed to do so if the soil type changes from soft or medium to hard. In the situation where the soil type changes from hard to medium or soft, less force is needed. Thereby, the tip of the spring tine will be adjusted to work in the same depth independently of the soil type.

In one or more embodiments, the actuator means comprises a pneumatic or hydraulic cylinder adapted for tilting the tine section relative to the first carrying frame, and a pump means adapted for supplying pressurized fluid to said pneumatic or hydraulic cylinder. Pressure tubes connect the two parts, and pressurized fluid is passed therethrough.

In one or more embodiments, the actuator means comprises a pneumatic or hydraulic cylinder adapted for tilting the tine section relative to the first carrying frame, and a pump means adapted for supplying pressurized fluid to said pneumatic or hydraulic cylinder, and wherein the control module is configured to instruct said pump means to increase or decrease the fluid pressure in said pneumatic or hydraulic cylinder when received data about the current degree of tilt of the tine section relative to the first carrying frame is above or below a pre-set threshold degree of tilt, in order to return the tine section to a position corresponding to said pre-set threshold degree of tilt of the tine section relative to the first carrying frame.

In one or more embodiments, the control module is configured to instruct said pump means to increase or decrease the fluid pressure gradually over a period of 1-40 seconds, e.g. 2-30 seconds, such as 5-20 seconds, such as over a period of 10-15 seconds. The gradual increase or decrease in fluid pressure minimizes the number of falls positives, such as when the harrow passes over a stone. When a relatively large change occurs in the current degree of tilt of the tine section relative to a previously measured degree of tilt or relative to a pre-set threshold degree of tilt, it may be preferred to increase or decrease the fluid pressure gradually over a relatively large period, such as over a period of 10-40 seconds. Similarly, when the change is relatively small, it may be preferred to increase or decrease the fluid pressure gradually over a relatively short period, such as over a period of 1-10 seconds.

In one or more embodiments, the spring tine harrow further comprises:
- a second carrying frame; and
- one or more tine sections suspended from said second carrying frame; wherein each tine section comprises a plurality of spring tines, each tine section being tiltably attached to said second carrying frame;
wherein the spring tine harrow further comprises a second sensor unit configured to determine the extent of tilt of the tine section relative to the carrying frame.

It may be an advantage that the control module is configured to compute mean values describing the degree of tilt of the tine section relative to the first and second, and optionally further, carrying frames to avoid falls positives.

A fourth embodiment not covered by the claimed invention relates to the use of a sensor unit to determine the working depth of the tines in a spring tine harrow.

In one or more embodiments, the spring time harrow comprises a first carrying frame, and one or more tine sections suspended from said first carrying frame; wherein each tine section comprises a plurality of spring tines, each tine section being tiltably attached to said carrying frame.

A fifth embodiment not covered by the claimed invention relates to a system for use in the control of a spring time harrow comprising a first carrying frame, one or more tine sections suspended from said first carrying frame, and an actuator means adapted for tilting the tine section relative to the first carrying frame; wherein each tine section comprises a plurality of spring tines, each tine section being tiltably attached to said carrying frame; the system comprising:
a sensor unit configured to determine the extent of tilt of the tine section relative to the first carrying frame.

In one or more embodiments, the system further comprises a control module in communication with the actuator means and configured to instruct the actuator means to tilt the tine section relative to the first carrying frame. The control module may in one or more embodiments be as described above.

The first aspect of the invention is a method for mechanical weed control of a crop field comprising;
- tilling with a spring tine weed harrow one to five days after crop planting; wherein the tilling step comprises:
- determining a preferred tip working depth of the spring tines of said spring tine weed harrow in the soil of said crop field;
- continuously or at preset time intervals, indirectly or directly, performing a measurement of the tip working depth of the spring tines in the soil of said crop field;
- in response to said measurement, adjusting, if necessary, the pressure on the spring tines in response to a deviation of said measured tip working depth, said deviation corresponding to a variation of soil type on said crop field.

In one or more embodiments, each measurement of the tip working depth is performed over a pre-set time period, such as for 5-10 seconds, and wherein the registered measurement represents a mean value describing the tip working depth within said pre-set time period.

In one or more embodiments, each measurement of the tip working depth is performed over a pre-set time period, such as for 5-10 seconds, and wherein the registered measurement represents a mean value of multiple measurements performed during said pre-set time period thereby describing the tip mean working depth within said pre-set time period.

In one or more embodiments, the pressure on the spring tines is gradually increased or decreased over a period of 1-40 seconds, e.g. 2-30 seconds, such as 5-20 seconds.

In one or more embodiments, the pressure on the spring tines is gradually increased or decreased over a period of 1-40 seconds, e.g. 2-30 seconds, such as 5-20 seconds in response to said deviation corresponding to a variation of soil type on said crop field.

A sixth embodiment not covered by the claimed invention relates to a spring tine weed harrow for use in the method according to the present invention comprising:
- a first carrying frame; and
- one or more tine sections suspended from said first carrying frame;
wherein each tine section comprises a plurality of spring tines, each tine section being tiltably attached to said carrying frame;
- a sensor unit configured to determine the tip working depth of the spring tines by determining the extent of tilt of the tine section relative to the first carrying frame; and
- an actuator means adapted for tilting the tine section relative to the first carrying frame.

The second aspect of the invention is a spring tine weed harrow for use in the method according to the first aspect of the invention comprising:
- a first carrying frame; and
- one or more tine sections suspended from said first carrying frame;
wherein each tine section comprises a plurality of spring tines, each tine section being tiltably attached to said carrying frame;
- a first sensor unit configured to determine the tip working depth of the spring tines by determining the extent of tilt of said tine section(s) relative to the first carrying frame;
- a first actuator means adapted for tilting said tine section(s) relative to the first carrying frame; and
- a control module configured for receiving data describing the tip working depth, preferably continuously, from the first sensor unit; wherein the control module is configured to compute a mean value from received data within a pre-set time period from said sensor unit, thereby describing the tip mean working depth within said pre-set time period.

In one or more embodiments, two or more tine sections are suspended from said first carrying frame; wherein the first sensor unit is configured to determine the tip working depth of the spring tines by determining the individual extent of tilt of at least two tine sections relative to the first carrying frame, and wherein the control module is configured for receiving data about the individual extent of tilt of said at least two tine sections relative to the first carrying frame and to compute a mean value from said received data.

In one or more embodiments, the spring tine harrow further comprises:
- a second carrying frame; and
- one or more tine sections suspended from said second carrying frame;
wherein each tine section comprises a plurality of spring tines, each tine section being tiltably attached to said second carrying frame;
- a second actuator means adapted for tilting said tine section(s) relative to said second carrying frame; and
- a second sensor unit configured to determine the extent of tilt of the tine section relative to the second carrying frame;
wherein the control module is configured for receiving data describing the tip working depth, preferably continuously, from said second sensor unit; wherein the control module is configured to compute a mean value from received data within a pre-set time period from said second sensor unit, thereby describing the tip mean working depth within said pre-set time period.

In one or more embodiments, the control module is configured for receiving data describing the tip working depth, preferably continuously, from both the first and the second sensor units; wherein the control module is configured to compute a mean value from received data within a pre-set time period from said first and second sensor units, thereby describing the tip mean working depth within said pre-set time period.

In one or more embodiments, the first and/or second sensor unit(s) are slidably connected to a spring tine.

In one or more embodiments, the first and second sensor units each comprises a ring- or tube-shaped connection slidably connected to a spring tine.

In one or more embodiments, the first and/or second sensor unit(s) comprises a linear position sensor.

In one or more embodiments, the control module is in communication with the first and/or second actuator means and configured to instruct said first and/or second actuator means to tilt a tine section relative to the first or second carrying frame.

In one or more embodiments, the control module is configured to instruct the first and/or second actuator means to tilt a tine section relative to the first or second carrying frame when received data about the current degree of tilt of a tine section relative to the first or second carrying frame is above or below a pre-set threshold degree of tilt, in order to return said tine section to a position corresponding to said pre-set threshold degree of tilt of said tine section relative to said first or second carrying frame.

In one or more embodiments, the first and/or second actuator means each comprises a pneumatic or hydraulic cylinder adapted for tilting a tine section relative to the first or second carrying frame, and a pump means adapted for supplying pressurized fluid to said pneumatic or hydraulic cylinder.

In one or more embodiments, the first and/or second actuator means each comprises a pneumatic or hydraulic cylinder adapted for tilting a tine section relative to the first or second carrying frame, and a pump means adapted for supplying pressurized fluid to said pneumatic or hydraulic cylinder; wherein the control module is configured to instruct said pump means to increase or decrease the fluid pressure in said pneumatic or hydraulic cylinder when received data about the current degree of tilt of a tine section relative to the first or second carrying frame is above or below a pre-set threshold degree of tilt, in order to return said tine section to a position corresponding to said pre-set threshold degree of tilt of said tine section relative to said first or second carrying frame.

In one or more embodiments, the control module is configured to instruct said pump means to increase or decrease the fluid pressure gradually over a period of 1-40 seconds, e.g. 2-30 seconds, such as 5-20 seconds.

### Brief description of the figures

Figure 1 shows a top view of a carrying frame with a tine section suspended therefrom in accordance with various embodiments of the invention;
Figure 2 shows a top view of a carrying frame with a tine section suspended therefrom in accordance with various embodiments of the invention;
Figure 3 shows a closeup view of a sensor units connection with a tine in accordance with various embodiments of the invention;
Figure 4 shows a side view of a sensor unit in accordance with various embodiments of the invention connected to a spring tine;
Figure 5 shows a side view of a sensor unit in accordance with various embodiments of the invention connected to a spring tine; and
Figure 6 shows a side view of a sensor unit in accordance with various embodiments of the invention connected to a spring tine.

### References

- 10: Soil surface
- 100: Spring tine harrow
- 200: First carrying frame
- 210: Hinge
- 300: Tine section
- 310: Spring tine
- 400: Sensor unit
- 410: Connection
- 420: Potentiometric position sensor
- 500: Actuator means
- 510: Pneumatic or hydraulic cylinder
- 600: Control module

### Detailed Description of the Invention

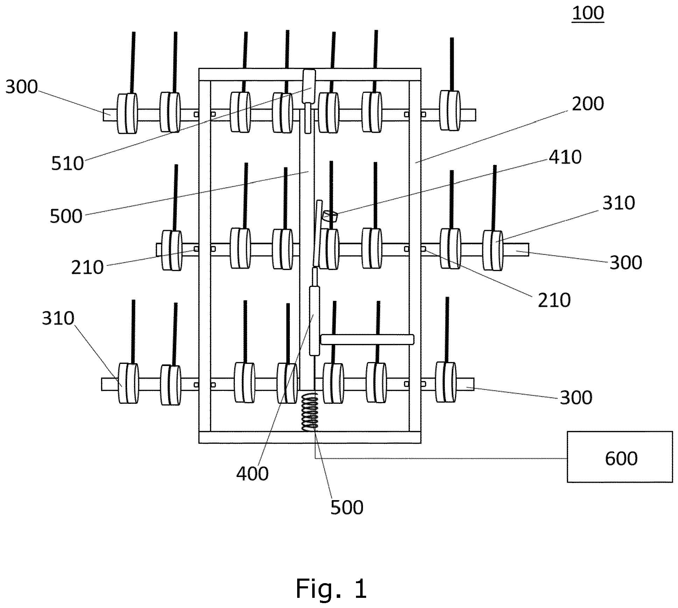

Figure 1 shows a top view of a spring tine harrow 100 comprising a carrying frame 200 with three tine sections 300 suspended therefrom. Each tine section 300 comprises a plurality of spring tines 310. The three tine sections 300 are all connected to the same actuator means 500 adapted for tilting the tine sections 300 relative to the first carrying frame 200. Each tine section 300 is tiltably attached to the carrying frame 200 by hinges 210. The spring tine harrow 100 comprises a sensor unit 400 configured to determine the extent of tilt of the tine section relative to the first carrying frame 200. The shown sensor unit comprising a potentiometric position sensor. The spring tine harrow 100 further comprises a control module 600 in communication with the actuator means 500 and configured to instruct the actuator means 500 to tilt the tine section 300 relative to the first carrying frame 200.

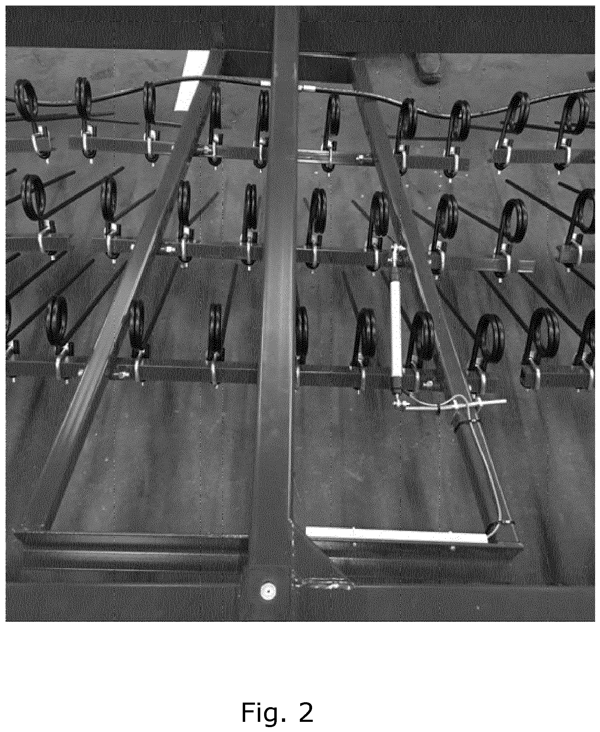

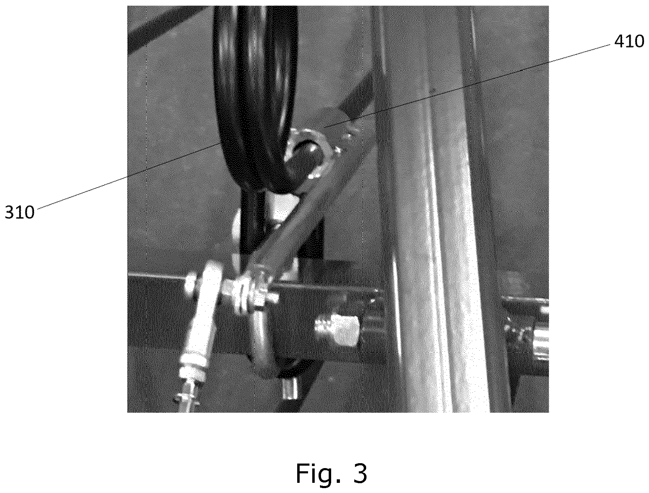

A photo of a similar spring tine harrow is shown in Figure 2, where the carrying frame (a carrying frame of a first type) is rhombic and pivotally connected to a carrying frame of a second type adapted for carrying a plurality of carrying frames of a first type. In Figure 3, a closeup view is shown of the connection 410 between the spring tine 310 and the sensor unit. The connection 310 is ring or tube shaped allowing for the sensor unit to move along the spring tine 310.

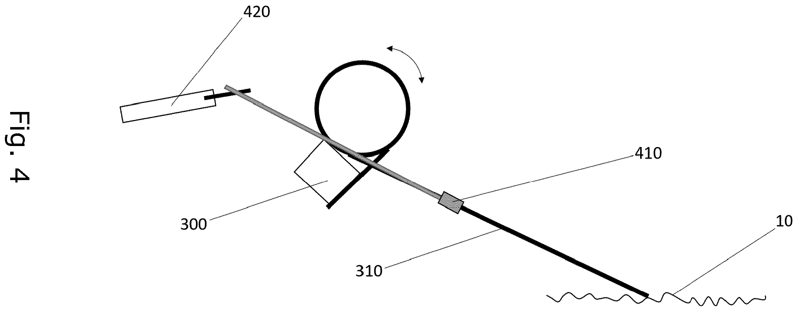

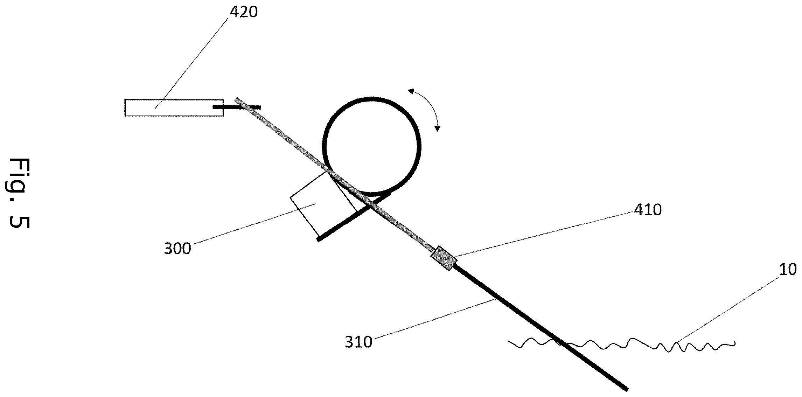

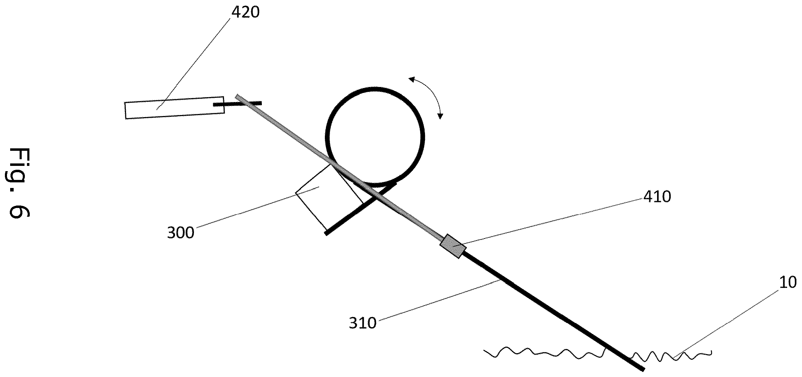

Figures 4-6 shows a side view of a sensor unit in accordance with various embodiments of the invention connected to a spring tine 310. Here, the connection 410 between the spring tine 310 and the sensor unit is also ring or tube shaped allowing for the sensor unit to move along the spring tine 310. De difference between the figures is that the tip of the spring tine 310 is positioned differently relative to the soil surface 10. In Figure 4, the tip of the spring tine 310 is positioned/moving on top of the soil surface 10, and a correction is needed, where tine section 300 must be tilted relative to the carrying frame (not shown) such that the tip of the spring tine 310 is moved into the soil surface 10 as shown in Figure 6. In Figure 5, the tip of the spring tine 310 is positioned/moving too deep below the soil surface 10, and a correction is needed, where tine section 300 must be tilted relative to the carrying frame (not shown) such that the tip of the spring tine 310 is moved below the soil surface 10 as shown in Figure 6.

## Claims

1. A method for mechanical weed control of a crop field comprising;
- tilling with a spring tine weed harrow one to five days after crop planting; wherein the tilling step comprises:
- determining a preferred tip working depth of the spring tines of said spring tine weed harrow in the soil of said crop field;
- continuously or at preset time intervals, indirectly or directly, performing a measurement of the tip working depth of the spring tines in the soil of said crop field;
- in response to said measurement, adjusting, if necessary, the pressure on the spring tines in response to a deviation of said measured tip working depth, said deviation corresponding to a variation of soil type on said crop field.

2. A method according to claim 1, wherein each measurement of the tip working depth is performed over a pre-set time period, such as for 2-10 seconds, and wherein the registered measurement represents a mean value of multiple measurements performed during said pre-set time period thereby describing the tip mean working depth within said pre-set time period.

3. A method according to any one of the claims 1-2, wherein the pressure on the spring tines is gradually increased or decreased over a period of 1-40 seconds, e.g. 2-30 seconds, such as 5-20 seconds in response to said deviation corresponding to a variation of soil type on said crop field.

4. A spring tine weed harrow (100) for use in the method according to any one of the claims 1-3 comprising:
- a first carrying frame (200); and
- one or more tine sections (300) suspended from said first carrying frame; wherein each tine section (300) comprises a plurality of spring tines (310), each tine section (300) being tiltably attached to said carrying frame (200);
- a first sensor unit (400) configured to determine the tip working depth of the spring tines by determining the extent of tilt of said tine section(s) relative to the first carrying frame (200);
- a first actuator means (500) adapted for tilting said tine section(s) (300) relative to the first carrying frame (200); and
- a control module (600) configured for receiving data describing the tip working depth, preferably continuously, from the first sensor unit (400); **characterised in that** the control module (600) is configured to compute a mean value from received data within a pre-set time period from said sensor unit (400), thereby describing the tip mean working depth within said pre-set time period.

5. A spring tine harrow (100) according to claim 4, **characterized in that** two or more tine sections (300) are suspended from said first carrying frame; wherein the first sensor unit (400) is configured to determine the tip working depth of the spring tines by determining the individual extent of tilt of at least two tine sections relative to the first carrying frame (200), and wherein the control module (600) is configured for receiving data about the individual extent of tilt of said at least two tine sections relative to the first carrying frame (200) and to compute a mean value from said received data.

6. A spring tine harrow (100) according to any one of the claims 4-5, further comprising:
- a second carrying frame; and
- one or more tine sections suspended from said second carrying frame;
wherein each tine section comprises a plurality of spring tines, each tine section being tiltably attached to said second carrying frame;
- a second actuator means adapted for tilting said tine section(s) relative to said second carrying frame; and
- a second sensor unit configured to determine the extent of tilt of the tine section relative to the second carrying frame;
wherein the control module (600) is configured for receiving data describing the tip working depth, preferably continuously, from said second sensor unit; wherein the control module (600) is configured to compute a mean value from received data within a pre-set time period from said second sensor unit, thereby describing the tip mean working depth within said pre-set time period.

7. A spring tine harrow (100) according to claim 6, **characterized in that** the control module (600) is configured for receiving data describing the tip working depth, preferably continuously, from both the first and the second sensor units; wherein the control module (600) is configured to compute a mean value from received data within a pre-set time period from said first and second sensor units, thereby describing the tip mean working depth within said pre-set time period.

8. A spring tine harrow (100) according to any one of the claims 4-7, **characterized in that** the first (400) and/or second sensor unit(s) are slidably connected to a spring tine (310).

9. A spring tine harrow (100) according to any one of the claims 4-8, **characterized in that** the first (400) and second sensor units each comprises a ring- or tube-shaped connection (410) slidably connected to a spring tine (310).

10. A spring tine harrow (100) according to any one of the claims 4-9, **characterized in that** the first (400) and/or second sensor unit(s) comprises a linear position sensor.

11. A spring tine harrow (100) according to any one of the claims 4-10, **characterized in that** the control module (600) is in communication with the first (500) and/or second actuator means, and configured to instruct said first (500) and/or second actuator means to tilt a tine section relative to the first (200) or second carrying frame.

12. A spring tine harrow (100) according to claim 11, **characterized in that** the control module (600) is configured to instruct the first (500) and/or second actuator means to tilt a tine section relative to the first (200) or second carrying frame when received data about the current degree of tilt of a tine section relative to the first or second carrying frame is above or below a pre-set threshold degree of tilt, in order to return said tine section to a position corresponding to said pre-set threshold degree of tilt of said tine section relative to said first (200) or second carrying frame.

13. A spring tine harrow (100) according to any one of the claims 4-12, **characterized in that** the first (500) and/or second actuator means each comprises a pneumatic or hydraulic cylinder (510) adapted for tilting a tine section (300) relative to the first or second carrying frame, and a pump means adapted for supplying pressurized fluid to said pneumatic or hydraulic cylinder (510).

14. A spring tine harrow (100) according to any one of the claims 4-13, **characterized in that** the first (500) and/or second actuator means each comprises a pneumatic or hydraulic cylinder (510) adapted for tilting a tine section (300) relative to the first or second carrying frame, and a pump means adapted for supplying pressurized fluid to said pneumatic or hydraulic cylinder (510); wherein the control module (600) is configured to instruct said pump means to increase or decrease the fluid pressure in said pneumatic or hydraulic cylinder (510) when received data about the current degree of tilt of a tine section relative to the first or second carrying frame is above or below a pre-set threshold degree of tilt, in order to return said tine section to a position corresponding to said pre-set threshold degree of tilt of said tine section relative to said first (200) or second carrying frame.

15. A spring tine harrow (100) according to any one of the claims 13-14, **characterized in that** the control module (600) is configured to instruct said pump means to increase or decrease the fluid pressure gradually over a period of 1-40 seconds, e.g. 2-30 seconds, such as 5-20 seconds.

## Patentansprüche

1. Verfahren zur mechanischen Unkrautbekämpfung eines Getreidefeldes, umfassend;
- Bodenbearbeiten mit einer Federzinkenunkrautegge ein bis fünf Tage nach Pflanzenaussaat;
wobei der Bodenbearbeitungsschritt Folgendes umfasst:
- Bestimmen einer bevorzugten Spitzenarbeitstiefe der Federzinken der Federzinkenunkrautegge in dem Boden des Getreidefeldes;
- indirektes oder direktes Durchführen einer Messung der Spitzenarbeitstiefe der Federzinken in dem Boden des Getreidefeldes kontinuierlich oder in voreingestellten Zeitintervallen;
- als Reaktion auf die Messung, Anpassen, falls erforderlich, des Drucks auf die Federzinken als Reaktion auf eine Abweichung der gemessenen Spitzenarbeitstiefe, wobei die Abweichung einer Variation von Bodentyp auf dem Getreidefeld entspricht.

2. Verfahren nach Anspruch 1, wobei jede Messung der Spitzenarbeitstiefe über einen voreingestellten Zeitraum durchgeführt wird, wie für 2-10 Sekunden, und wobei die registrierte Messung einen Mittelwert von mehreren Messungen darstellt, die während des voreingestellten Zeitraums durchgeführt werden, wodurch die mittlere Spitzenarbeitstiefe innerhalb des voreingestellten Zeitraums beschrieben wird.

3. Verfahren nach einem der Ansprüche 1-2, wobei der Druck auf die Federzinken als Reaktion darauf, dass die Abweichung einer Variation von Bodentyp auf dem Getreidefeld entspricht, über einen Zeitraum von 1-40 Sekunden, z. B. 2-30 Sekunden, wie 5-20 Sekunden, allmählich erhöht oder verringert wird.

4. Federzinkenunkrautegge (100) zur Verwendung in dem Verfahren nach einem der Ansprüche 1-3, umfassend:
- einen ersten Tragrahmen (200); und
- einen oder mehrere Zinkenabschnitte (300), die an dem ersten Tragrahmen aufgehängt sind;
wobei jeder Zinkenabschnitt (300) eine Vielzahl von Federzinken (310) umfasst, wobei jeder Zinkenabschnitt (300) neigbar an dem Tragrahmen (200) angebracht ist;
- eine erste Sensoreinheit (400), die konfiguriert ist, um die Spitzenarbeitstiefe der Federzinken zu bestimmen, indem das Ausmaß der Neigung des Zinkenabschnittes/der Zinkenabschnitte relativ zu dem ersten Tragrahmen (200) bestimmt wird;
- ein erstes Betätigungsmittel (500), das ausgelegt ist, um den/die Zinkenabschnitt(e) (300) relativ zu dem ersten Tragrahmen (200) zu neigen; und
- ein Steuermodul (600), das konfiguriert ist, um Daten, welche die Spitzenarbeitstiefe beschreiben, bevorzugt kontinuierlich, von der ersten Sensoreinheit (400) zu empfangen; **dadurch gekennzeichnet, dass** das Steuermodul (600) konfiguriert ist, um einen Mittelwert aus empfangenen Daten innerhalb eines voreingestellten Zeitraums von der Sensoreinheit (400) zu berechnen, wodurch die mittlere Spitzenarbeitstiefe innerhalb des voreingestellten Zeitraums beschrieben wird.

5. Federzinkenegge (100) nach Anspruch 4, **dadurch gekennzeichnet, dass** zwei oder mehr Zinkenabschnitte (300) an dem ersten Tragrahmen aufgehängt sind; wobei die erste Sensoreinheit (400) konfiguriert ist, um die Spitzenarbeitstiefe der Federzinken zu bestimmen, indem das individuelle Ausmaß der Neigung von zumindest zwei Zinkenabschnitten relativ zu dem ersten Tragrahmen (200) bestimmt wird, und wobei das Steuermodul (600) konfiguriert ist, um Daten über das individuelle Ausmaß der Neigung der zumindest zwei Zinkenabschnitte relativ zu dem ersten Tragrahmen (200) zu empfangen und um einen Mittelwert aus den empfangenen Daten zu berechnen.

6. Federzinkenegge (100) nach einem der Ansprüche 4-5, ferner umfassend:
- einen zweiten Tragrahmen; und
- einen oder mehrere Zinkenabschnitte, die an dem zweiten Tragrahmen aufgehängt sind;
wobei jeder Zinkenabschnitt eine Vielzahl von Federzinken umfasst, wobei jeder Zinkenabschnitt neigbar an dem zweiten Tragrahmen angebracht ist;
- ein zweites Betätigungsmittel, das ausgelegt ist, um den/die Zinkenabschnitt(e) relativ zu dem zweiten Tragrahmen zu neigen; und
- eine zweite Sensoreinheit, die konfiguriert ist, um das Ausmaß der Neigung des Zinkenabschnittes relativ zu dem zweiten Tragrahmen zu bestimmen;
wobei das Steuermodul (600) konfiguriert ist, um Daten, welche die Spitzenarbeitstiefe beschreiben, bevorzugt kontinuierlich, von der zweiten Sensoreinheit zu empfangen; wobei das Steuermodul (600) konfiguriert ist, um einen Mittelwert aus empfangenen Daten innerhalb eines voreingestellten Zeitraums von der Sensoreinheit zu berechnen, wodurch die mittlere Spitzenarbeitstiefe innerhalb des voreingestellten Zeitraums beschrieben wird.

7. Federzinkenegge (100) nach Anspruch 6, **dadurch gekennzeichnet, dass** das Steuermodul (600) konfiguriert ist um Daten, welche die Spitzenarbeitstiefe beschreiben, bevorzugt kontinuierlich, sowohl von der ersten als auch von der zweiten Sensoreinheit zu empfangen; wobei das Steuermodul (600) konfiguriert ist, um einen Mittelwert aus empfangenen Daten innerhalb eines voreingestellten Zeitraums von der ersten und der zweiten Sensoreinheit zu berechnen, wodurch die mittlere Spitzenarbeitstiefe innerhalb des voreingestellten Zeitraums beschrieben wird.

8. Federzinkenegge (100) nach einem der Ansprüche 4-7, **dadurch gekennzeichnet, dass** die erste (400) und/oder die zweite Sensoreinheit(en) verschiebbar mit einem Federzinken (310) verbunden sind.

9. Federzinkenegge (100) nach einem der Ansprüche 4-8, **dadurch gekennzeichnet, dass** die erste (400) und die zweite Sensoreinheit jeweils eine ring- oder rohrförmige Verbindung (410) umfassen, die verschiebbar mit einem Federzinken (310) verbunden ist.

10. Federzinkenegge (100) nach einem der Ansprüche 4-9, **dadurch gekennzeichnet, dass** die erste (400) und/oder die zweite Sensoreinheit(en) einen linearen Positionssensor umfasst.

11. Federzinkenegge (100) nach einem der Ansprüche 4-10, **dadurch gekennzeichnet, dass** das Steuermodul (600) in Kommunikation mit dem ersten (500) und/oder dem zweiten Betätigungsmittel und konfiguriert ist, um das erste (500) und/oder das zweite Betätigungsmittel anzuweisen, einen Zinkenabschnitt relativ zu dem ersten (200) oder dem zweiten Tragrahmen zu neigen.

12. Federzinkenegge (100) nach Anspruch 11, **dadurch gekennzeichnet, dass** das Steuermodul (600) konfiguriert ist, um das erste (500) und/oder das zweite Betätigungsmittel anzuweisen, einen Zinkenabschnitt relativ zu dem ersten (200) oder dem zweiten Tragrahmen zu neigen, wenn empfangene Daten über den aktuellen Grad der Neigung eines Zinkenabschnittes relativ zu dem ersten oder dem zweiten Tragrahmen über oder unter einem voreingestellten Schwellengrad an Neigung sind, um den Zinkenabschnitt in eine Position zurückzubringen, die dem voreingestellten Schwellengrad an Neigung des Zinkenabschnittes relativ zu dem ersten (200) oder dem zweiten Tragrahmen entspricht.

13. Federzinkenegge (100) nach einem der Ansprüche 4-12, **dadurch gekennzeichnet, dass** das erste (500) und/oder das zweite Betätigungsmittel jeweils einen pneumatischen oder hydraulischen Zylinder (510), der ausgelegt ist, um einen Zinkenabschnitt (300) relativ zu dem ersten oder dem zweiten Tragrahmen zu neigen, und ein Pumpmittel umfasst, das ausgelegt ist, um Druckfluid an den pneumatischen oder hydraulischen Zylinder (510) zu liefern.

14. Federzinkenegge (100) nach einem der Ansprüche 4-13, **dadurch gekennzeichnet, dass** das erste (500) und/oder das zweite Betätigungsmittel jeweils einen pneumatischen oder hydraulischen Zylinder (510), der ausgelegt ist, um einen Zinkenabschnitt (300) relativ zu dem ersten oder dem zweiten Tragrahmen zu neigen, und ein Pumpmittel umfasst, das ausgelegt ist, um Druckfluid an den pneumatischen oder hydraulischen Zylinder (510) zu liefern; wobei das Steuermodul (600) konfiguriert ist, um das Pumpmittel anzuweisen, den Fluiddruck in dem pneumatischen oder hydraulischen Zylinder (510) zu erhöhen oder zu verringern, wenn empfangene Daten über den aktuellen Neigungsgrad eines Zinkenabschnittes relativ zu dem ersten oder dem zweiten Tragrahmen über oder unter einem voreingestellten Schwellenneigungsgrad sind, um den Zinkenabschnitt in eine Position zurückzubringen, die dem voreingestellten Schwellenneigungsgrad des Zinkenabschnittes relativ zu dem ersten (200) oder dem zweiten Tragrahmen entspricht.

15. Federzinkenegge (100) nach einem der Ansprüche 13-14, **dadurch gekennzeichnet, dass** das Steuermodul (600) konfiguriert ist, um das Pumpmittel anzuweisen, den Fluiddruck graduell über einen Zeitraum von 1-40 Sekunden, z. B. 2-30 Sekunden, wie 5-20 Sekunden, zu erhöhen oder zu verringern.

## Revendications

1. Procédé de désherbage mécanique d'un champ de cultures comprenant ;
- le labourage avec une herse de désherbage à dents flexibles un à cinq jours après la plantation de cultures ;
dans lequel l'étape de labourage comprend :
- la détermination d'une profondeur de travail des pointes préférée des dents flexibles de ladite herse de désherbage à dents flexibles dans le sol dudit champ de cultures ;
- en continu ou à des intervalles de temps prédéfinis, indirectement ou directement, la réalisation d'une mesure de la profondeur de travail des pointes des dents flexibles dans le sol dudit champ de cultures ;
- en réponse à ladite mesure, le réglage, si nécessaire, de la pression sur les dents flexibles en réponse à un écart de ladite profondeur de travail des pointes mesurée, ledit écart correspondant à une variation de type de sol sur ledit champ de cultures.

2. Procédé selon la revendication 1, dans lequel chaque mesure de la profondeur de travail des pointes est réalisée sur une période de temps prédéfinie, telle que pendant 2 à 10 secondes, et dans lequel la mesure enregistrée représente une valeur moyenne de multiples mesures réalisées pendant ladite période de temps prédéfinie décrivant ainsi la profondeur de travail moyenne des pointes dans les limites de ladite période de temps prédéfinie.

3. Procédé selon l'une quelconque des revendications 1 et 2, dans lequel la pression sur les dents flexibles est augmentée ou diminuée progressivement sur une période de 1 à 40 secondes, par exemple de 2 à 30 secondes, telle que de 5 à 20 secondes en réponse audit écart correspondant à une variation de type de sol sur ledit champ de cultures.

4. Herse de désherbage à dents flexibles (100) destinée à être utilisée dans le procédé selon l'une quelconque des revendications 1 à 3, comprenant :
- un premier châssis porteur (200) ; et
- une ou plusieurs sections de dents (300) suspendues audit premier châssis porteur ;
dans laquelle chaque section de dents (300) comprend une pluralité de dents flexibles (310), chaque section de dents (300) étant fixée de manière inclinable audit châssis porteur (200) ;
- une première unité de capteur (400) configurée pour déterminer la profondeur de travail des pointes des dents flexibles en déterminant l'étendue d'inclinaison de ladite ou desdites sections de dents par rapport au premier châssis porteur (200) ;
- un premier moyen d'actionnement (500) conçu pour incliner ladite ou lesdites sections de dents (300) par rapport au premier châssis porteur (200) ; et
- un module de commande (600) configuré pour recevoir des données décrivant la profondeur de travail des pointes, de préférence en continu, depuis la première unité de capteur (400) ; **caractérisée en ce que** le module de commande (600) est configuré pour calculer une valeur moyenne depuis des données reçues dans les limites d'une période de temps prédéfinie depuis ladite unité de capteur (400), décrivant ainsi la profondeur de travail moyenne des pointes dans les limites de ladite période de temps prédéfinie.

5. Herse à dents flexibles (100) selon la revendication 4, **caractérisée en ce que** deux sections de dents (300) ou plus sont suspendues audit premier châssis porteur ; dans laquelle la première unité de capteur (400) est configurée pour déterminer la profondeur de travail des pointes des dents flexibles en déterminant l'étendue d'inclinaison individuelle d'au moins deux sections de dents par rapport au premier châssis porteur (200), et dans laquelle le module de commande (600) est configuré pour recevoir des données concernant l'étendue d'inclinaison individuelle desdites au moins deux sections de dents par rapport au premier châssis porteur (200) et pour calculer une valeur moyenne depuis lesdites données reçues.

6. Herse à dents flexibles (100) selon l'une quelconque des revendications 4 et 5, comprenant en outre :
- un second châssis porteur ; et
- une ou plusieurs sections de dents suspendues audit second châssis porteur ;
dans laquelle chaque section de dents comprend une pluralité de dents flexibles, chaque section de dents étant fixée de manière inclinable audit second châssis porteur ;
- un second moyen d'actionnement conçu pour incliner ladite ou lesdites sections de dents par rapport audit second châssis porteur ; et
- une seconde unité de capteur configurée pour déterminer l'étendue d'inclinaison de la section de dents par rapport au second châssis porteur ;
dans laquelle le module de commande (600) est configuré pour recevoir des données décrivant la profondeur de travail des pointes, de préférence en continu, depuis ladite seconde unité de capteur ; dans laquelle le module de commande (600) est configuré pour calculer une valeur moyenne depuis des données reçues dans les limites d'une période de temps prédéfinie depuis ladite seconde unité de capteur, décrivant ainsi la profondeur de travail moyenne des pointes dans les limites de ladite période de temps prédéfinie.

7. Herse à dents flexibles (100) selon la revendication 6, **caractérisée en ce que** le module de commande (600) est configuré pour recevoir des données décrivant la profondeur de travail des pointes, de préférence en continu, à la fois depuis les première et seconde unités de capteur ;
dans laquelle le module de commande (600) est configuré pour calculer une valeur moyenne depuis des données reçues dans les limites d'une période de temps prédéfinie depuis lesdites première et seconde unités de capteur, décrivant ainsi la profondeur de travail moyenne des pointes dans les limites de ladite période de temps prédéfinie.

8. Herse à dents flexibles (100) selon l'une quelconque des revendications 4 à 7, **caractérisée en ce que** les première (400) et/ou seconde unités de capteur sont reliées de manière coulissante à une dent flexible (310).

9. Herse à dents flexibles (100) selon l'une quelconque des revendications 4 à 8, **caractérisée en ce que** les première (400) et seconde unités de capteur comprennent chacune une liaison en forme d'anneau ou de tube (410) reliée de manière coulissante à une dent flexible (310).

10. Herse à dents flexibles (100) selon l'une quelconque des revendications 4 à 9, **caractérisée en ce que** les première (400) et/ou seconde unités de capteur comprennent un capteur de position linéaire.

11. Herse à dents flexibles (100) selon l'une quelconque des revendications 4 à 10, **caractérisée en ce que** le module de commande (600) est en communication avec les premier (500) et/ou second moyens d'actionnement, et configuré pour ordonner auxdits premier (500) et/ou second moyens d'actionnement d'incliner une section de dents par rapport aux premier (200) ou second châssis porteurs.

12. Herse à dents flexibles (100) selon la revendication 11, **caractérisée en ce que** le module de commande (600) est configuré pour ordonner aux premier (500) et/ou seconds moyens d'actionnement d'incliner une section de dents par rapport aux premier (200) ou second châssis porteurs lorsque des données reçues concernant le degré d'inclinaison actuel d'une section de dents par rapport aux premier ou second châssis porteurs sont supérieures ou inférieures à un degré d'inclinaison seuil prédéfini, afin de ramener ladite section de dents dans une position correspondant audit degré d'inclinaison seuil prédéfini de ladite section de dents par rapport auxdits premier (200) ou second châssis porteurs.

13. Herse à dents flexibles (100) selon l'une quelconque des revendications 4 à 12, **caractérisée en ce que** les premier (500) et/ou second moyens d'actionnement comprennent chacun un vérin pneumatique ou hydraulique (510) conçu pour incliner une section de dents (300) par rapport aux premier ou second châssis porteurs, et un moyen de pompe conçu pour fournir un fluide sous pression audit vérin pneumatique ou hydraulique (510).

14. Herse à dents flexibles (100) selon l'une quelconque des revendications 4 à 13, **caractérisée en ce que** les premier (500) et/ou second moyens d'actionnement comprennent chacun un vérin pneumatique ou hydraulique (510) conçu pour incliner une section de dents (300) par rapport aux premier ou second châssis porteurs, et un moyen de pompe conçu pour fournir un fluide sous pression audit vérin pneumatique ou hydraulique (510) ; dans laquelle le module de commande (600) est configuré pour ordonner audit moyen de pompe d'augmenter ou de diminuer la pression de fluide dans ledit vérin pneumatique ou hydraulique (510) lorsque des données reçues concernant le degré d'inclinaison actuel d'une section de dents par rapport aux premier ou second châssis porteurs est supérieur ou inférieur à un degré d'inclinaison seuil prédéfini, afin de ramener ladite section de dents dans une position correspondant audit degré d'inclinaison seuil prédéfini de ladite section de dents par rapport auxdits premier (200) ou second châssis porteurs.

15. Herse à dents flexibles (100) selon l'une quelconque des revendications 13 et 14, **caractérisée en ce que** le module de commande (600) est configuré pour ordonner audit moyen de pompe d'augmenter ou de diminuer progressivement la pression de fluide sur une période de 1 à 40 secondes, par exemple de 2 à 30 secondes, telle que de 5 à 20 secondes.
